# EUROPEAN PATENT SPECIFICATION

(11) **EP 2 413 628 B1**
(45) Date of publication and mention of the grant of the patent: **08.08.2018**
(21) Application number: 10788873.7
(22) Date of filing: 08.06.2010
(51) Int. Cl.: H04L 1/00, H04W 52/16, H04W 52/26, H04W 72/12

(54) **SCHEDULING METHOD AND DEVICE FOR HIGH-SPEED PACKET ACCESS SYSTEM**
TERMINIERUNGSVERFAHREN UND -VORRICHTUNG FÜR EIN HOCHGESCHWINDIGKEITS-PAKETZUGANGSSYSTEM
PROCÉDÉ ET DISPOSITIF DE PROGRAMMATION POUR SYSTÈME D ACCÈS PAR PAQUETS À HAUT DÉBIT

(30) Priority: 29.06.2009 CN 200910150681
(43) Date of publication of application: 01.02.2012
(73) Proprietor: ZTE Corporation, Guangdong Province 518057 (CN)
(72) Inventor: LI, Ruifeng, Shenzhen City Guangdong Province 518057 (CN)
(74) Representative: Murgitroyd & Company
(86) International application number: PCT/CN2010/073669
(87) International publication number: WO 2010/145477

(56) References cited:
- EP-A1- 1 326 350
- CN-A- 101 094 030
- CN-A- 101 137 196
- CN-A- 101 272 542
- CN-A- 101 277 227
- CN-A- 101 350 804
- CN-A- 101 594 639
- NOKIA: "HS-SCCH testing; 3GPP DRAFT; R4-030125", 3RD GENERATION PARTNERSHIP PROJECT (3GPP), 23 February 2003 (2003-02-23), XP050171735, [retrieved on 2003-02-23]

## Description

### Technical Field

The present invention relates to the field of evolved high-speed packet access (HSPA+), and more particularly, to a method and device for scheduling high-speed packet access system.

### Background of the Related Art

A modulation mode of quadrature amplitude modulation (64QAM) increases the maximum throughput in the physical layer of the high-speed downlink packet access (HSDPA) in a cell from 14.4M to 21.6M. The HSPA+, however, simultaneously supports the following three modulations: quadrature phase shift keying (QPSK), 16QAM and 64QAM. In the existing HSDPA, one bit in X1 in a high-speed shared control channel (HS-SCCH) is used to indicate two modulation modes, i.e., 0 indicating the QPSK and 1 indicating the 16QAM. After introducing the 64QAM, it is obvious that one bit cannot indicate three modulation modes, thus another bit should be added, that is, two bits should be used to indicate the three modulation modes. Wherein, when the user equipment (UE) of 64QAM is scheduled, the number of high-speed downlink share channel (HSDSCH) code channels and an initial code channel number which are used meet a certain relationship with the selected HSSCCH code channel number. While for a user equipment not supporting the 64QAM, there is no such an issue. Therefore, for the HSPA+, changing the scheduling algorithm is relatively complicated because the selection of the HSSCCH code channel should affect the number of the selected HSDSCH code channels and the HSDSCH initial code channel number during the scheduling.

Therefore, providing a new method for scheduling process is needed to simplify the complex operation due to the change of the scheduling algorithm.

The document "HS-SCCH testing" discloses that it was considered how the HS-SCCH performance should be addressed.

### Content of the Invention

The present invention provides a method and device for scheduling HSPA system to simplify the complex operations due to the change of the scheduling algorithm.

The above problem is solved by a method according to claim 1 and a device according to claim 8. Further improvements and embodiments are provided in the dependent claims.

Provided is a method for scheduling the HSPA system, and the method comprises:
after a base station determines priority queues of UEs to be scheduled in a cell, the base station selecting a HSSCCH code channel for each UE according to a position of each UE in the priority queues, a condition of the UE being scheduled in the previous sub-frame and a capability level of the UE, and updating the number of HSDSCHs currently available in the cell; and
said base station selecting a transport block size, a HSDSCH code channel power, the number of HSDSCH code channels and a HSDSCH initial code channel number for each UE according to the HSSCCH code channel selected for each UE, the number of HSDSCH code channels available in the cell, a HSDSCH power available in the cell and the capability level of each UE.

The step of the base station selecting a HSSCCH code channel for each UE comprises:
said base station calculating, according to an order of the priority queues, transport block size, the number of HSDSCH code channels and the HSDSCH code channel power for each UE of other user equipments except the last UE in the priority queues; and selecting HSSCCH code channels and HSDSCH initial code channel numbers for the other UEs; and
said base station selecting a HSSCCH code channel for the last UE in the priority queues, and calculating transport block size, the number of HSDSCH code channels, a HSDSCH initial code channel number and a HSDSCH code channel power for the last UE in the priority queues.

The step of said base station selecting the number of HSDSCH code channels for each UE comprises: when one of said other UEs supports a modulation mode of 64QAM and a modulation mode selected for using in the current scheduling is not a modulation mode of QPSK, the base station configuring M+1 HSDSCH code channels for this UE after said base station finds out that the number of HSDSCH code channels of this UE is M according to the 3GPP protocol.

The step of said base station selecting the number of HSDSCH code channels for each UE comprises: when the last UE supports a modulation mode of 64QAM and a modulation mode selected for using in the current scheduling is not a modulation mode of QPSK, said base station, according to a HSSCCH odd-even position selectable for the last UE, determining the number of HSDSCH code channels that can be used by the last UE in the current scheduling.

The step of said base station selecting the HSSCCH code channels for said other UEs comprises: selecting a HSSCCH code channel for the UE that selects the same HSSCCH in two continuous sub-frames; and then selecting a HSSCCH code channel for the UE that supports a modulation mode of 64QAM and the modulation mode for which selected for using in the current scheduling is not a modulation mode of QPSK.

The step of said base station selecting the HSSCCH code channel for the UE that supports the modulation mode of 64QAM and the modulation mode of which selected for using in the current scheduling is not the modulation mode of QPSK comprises:
said base station determining the HSDSCH initial code channel number of the UE from back to front according to the number of HSDSCH code channels of the UE and the number of HSDSCH code channels currently available in the cell; determining the HSSCCH code channel of the UE according to the 3GPP protocol; and updating the number of the HSDSCH code channels available in the cell.

After the base station determines the priority queues of the UEs to be scheduled in the cell, the method further comprises: if a UE to be scheduled satisfies any of the following conditions, said base station determining that the UE is the last UE in the priority queues:
condition A: said UE is located at the last in said priority queues;
condition B: a position serial number of the UE in the priority queues is equal to the total number of the HSSCCH channels in the cell;
condition C: the number of the HSDSCH code channels in the 3GPP protocol corresponding to a channel quality indication (CQI) reported by the UE and the capability level of said UE is larger than or equal to the number of the HSDSCHs currently available in the cell, and transport block size in the 3GPP protocol corresponding to the UE is smaller than a data stock amount of the UE;
condition D: the HSDSCH power in the cell is not strong enough.

The step of said base station determining that the UE is the last UE in the priority queues further comprises: condition C being satisfied if: for the UE supporting the modulation mode of 64QAM, the number of the HSDSCH code channels in the 3GPP protocol corresponding to the UE plus one is larger than or equal to the number of the HSDSCHs currently available in the cell, and transport block size in the 3GPP protocol corresponding to said UE is smaller than the data stock amount of the UE.

Provided is a device for scheduling a HSPA system, and the device at least comprises a judging module and a calculating and scheduling module, wherein,
said judging module is configured to: judge whether a UE to be scheduled currently is the last UE in priority queues of UEs to be scheduled in a cell, and send a judgment result to the calculating and scheduling module; and
said calculating and scheduling module is configured to: receive the judgment result sent from the judging module; and if the UE to be scheduled currently is not the last UE in the priority queues, calculate transport block size, the number of HSDSCHs and a HSDSCH code channel power of the UE, and select a HSSCCH code channel and a HSDSCH initial code channel number for the UE; or, if the UE to be scheduled currently is the last UE in the priority queues, selecting a HSSCCH code channel for the UE, and calculate transport block size, the number of HSDSCH code channels, a HSDSCH initial code channel number and a HSDSCH code channel power of the UE.

Said judging module is further configured to:
when the UE to be scheduled currently satisfies any of the following conditions, determine that the UE is the last UE in the priority queues:
condition A: said UE is located at the last in said priority queues;
condition B: a position serial number of the UE in the priority queues is equal to the total number of the HSSCCH channels in the cell;
condition C: the number of the HSDSCH code channels in the 3GPP protocol corresponding to a channel quality indication (CQI) reported by the UE and the capability level of said UE is larger than or equal to the number of HSDSCHs currently available in the cell, and transport block size in the 3GPP protocol corresponding to the UE is smaller than a data stock amount of the user equipment;
condition D: the HSDSCH power in the cell is not strong enough.

Said judging module is further configured to: satisfy the condition C if, for the UE supporting the modulation mode of 64QAM, the number of the HSDSCH code channels in the 3GPP protocol corresponding to the UE plus one is larger than or equal to the number of HSDSCHs currently available in the cell, and transport block size in the 3GPP protocol corresponding to said UE is smaller than the data stock amount of the UE.

The technical scheme utilizes reasonably the HSSCCH resource, the HSDSCH code channel resource and power resource in the cell to fulfill relatively ideal HSPA+ throughput.

### Brief Description of Drawings

Figure 1 is a schematic diagram of a structure of a scheduling device in accordance with an embodiment of the present invention;
Figure 2 is a flow chart of scheduling in accordance with an embodiment of the present invention.

### Preferred Embodiments of the Present Invention

The technical scheme of the present invention will be illustrated in detail in combination with the accompanying drawings and the specific embodiments.

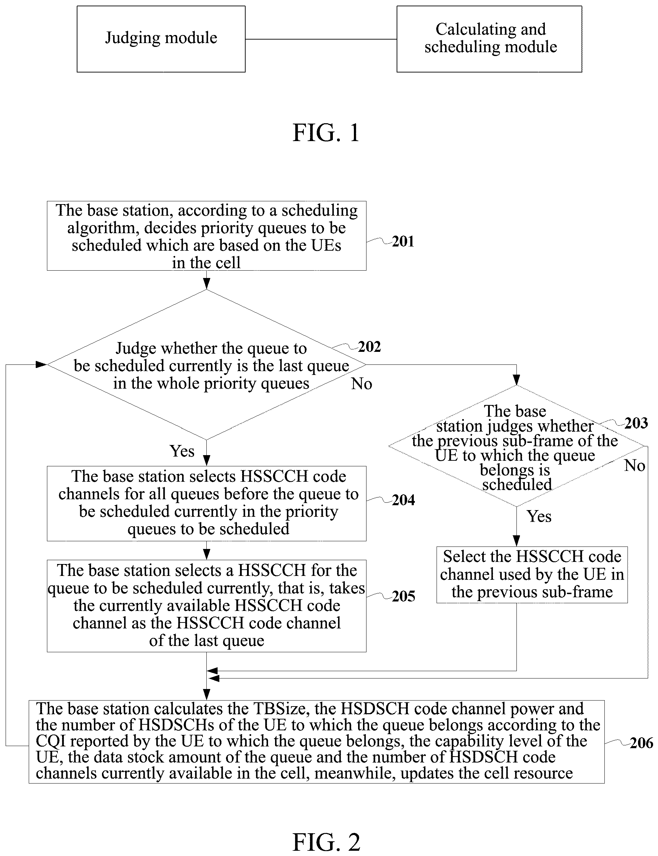

A device for scheduling a HSPA system, as shown in FIG. 1, comprises at least a judging module and a calculating and scheduling module. The function of each module will be illustrated below.

The judging module is used to judge whether a UE to be scheduled currently is the last UE in priority queues of UEs to be scheduled in a cell, and send a judgment result to the calculating and scheduling module; and
the calculating and scheduling module is used to receive the judgment result sent from the judging module, and if the UE to be scheduled currently is not the last UE in the priority queues, calculate the transport block size, the number of HSDSCH code channels and a HSDSCH code channel power of the UE, and select a HSSCCH code channel and a HSDSCH initial code channel number for the UE; and if the UE to be scheduled currently is the last UE in the priority queues, select a HSSCCH code channel for the UE, and calculate the transport block size, the number of HSDSCH code channels, a HSDSCH initial code channel number and a HSDSCH code channel power of the UE.

Wherein, when the UE to be scheduled currently satisfies any of the following conditions, the judging module determines that the UE is the last UE in the priority queues:
condition A: the UE is located at the last in the priority queues;
condition B: a position serial number of the UE in the priority queues is equal to the total number of the HSSCCH channels in the cell;
condition C: the number of the HSDSCH code channels in the 3GPP 25214 list corresponding to a channel quality indication (CQI) reported by the UE to which the Queue belongs and the capability level of the UE is larger than or equal to the number of the HSDSCHs currently available in the cell, and the transport block size (TBSize) available for the UE in the 3GPP 25214 list is smaller than a data stock amount of the Queue; wherein, for a UE supporting the 64QAM mode, the corresponding number of the HSDSCH code channels in the 3GPP 25214 list plus 1 is larger than or equal to the number of HSDSCHs available in the cell, and the TBSize corresponding to the UE is smaller than the data stock amount of the Queue.
condition D: the HSDSCH power in this cell is not strong enough.

The scheduling process of the above-mentioned scheduling device (i.e., a base station in the present embodiment) comprises the following steps, as shown in Fig. 2.

Step 201: the base station, according to a scheduling algorithm, decides priority queues to be scheduled which are based on the UEs in the cell.

In this step, according to the prior art, the base station decides the priority queues to be scheduled currently in the cell according to the scheduling algorithm such as fair service time, proportional fair scheduling algorithm or a maximum carrier to interference ratio, etc.

Step 202: the base station orderly extracts the queue to be scheduled from the priority queues to be scheduled which are based on the UEs as the queue to be scheduled currently, and judges whether the queue to be scheduled currently is the last queue in the whole priority queues; and if yes, proceed to step 204, otherwise, proceed to step 203.

In this step, if the Queue to be scheduled currently satisfies any one of the following conditions, the base station determines that the queue to be scheduled currently is the last queue:
condition A: the queue is located at the last in the priority queues to be scheduled;
condition B: a position serial number of the queue in the priority queues to be scheduled is equal to the total number of the HSSCCH channels in the cell;
condition C: the number of the HSDSCH code channels in the 3GPP 25214 list corresponding to a channel quality indication (CQI) reported by the UE to which the queue belongs and the capability level of the UE is larger than or equal to the number of the HSDSCHs currently available in the cell, and the transport block size available for the UE in the 3GPP 25214 list is smaller than data stock amount of the queue; wherein, for a UE supporting the 64QAM mode, the corresponding number of the HSDSCH code channels in the 3GPP 25214 list plus 1 is larger than or equal to the number of HSDSCHs available in the cell, and the TBSize corresponding to the UE is smaller than the data stock amount of the Queue;
condition D: the HSDSCH power in this cell is not strong enough.

Step 203: the base station judges whether the previous sub-frame of the UE to which the queue belongs is scheduled; and if yes, the base station directly selects the HSSCCH code channel used by the UE in the previous sub-frame, and proceed to step 206, otherwise, directly proceed to step 206 rather than the base station selects a HSSCCH code channel.

Step 204: the base station selects HSSCCH code channels for all queues before the queue to be scheduled currently (not including the queue to be scheduled currently, that is, the last queue) in the priority queues to be scheduled.

In this step, the base station only selects the HSSCCH code channels for those queues not selecting the HSSCCH code channels yet in the all queues (not including the queue to be scheduled currently, that is, the last queue). the specific process is as follows:
firstly, the base station selects a HSSCCH code channel for the UE satisfying that two continuous sub-frames select the same HSSCCH in all queues (not including the queue to be scheduled currently, that is, the last queue), and the selected HSSCCH code channel for the UE is the same HSSCCH code channel selected by the two continuous sub-frames;
secondly, the base station selects a HSSCCH code channel for the UE supporting a modulation mode of 64QAM but selected not a modulation mode of QPSK by the current sub-frame; specifically, the base station determines the number of HSDSCH code channels used by the UE from the 3GPP 25214 list, calculates the HSDSCH initial code channel number of this UE from back to the front according to the number of HSDSCH code channels currently available in the cell, and determines the HSSCCH code channel corresponding to the HSDSCH initial code channel number according to the 3GPP 25212 protocol, and then updates the number of HSDSCH code channels available in the cell;
finally, the base station randomly selects HSSCCH code channels not used by other users for the users not satisfying the above-mentioned two conditions.

Step 205: the base station selects a HSSCCH for the queue to be scheduled currently (i.e., the last queue), that is, takes the currently available HSSCCH code channel as the HSSCCH code channel of the last queue.

In this step, if the UE to which the queue to be scheduled currently supports 64QAM and the modulation mode selected in the current scheduling is not the modulation mode of QPSK, the base station judges that the HSSCCH code channels not used by the other users are located at an odd-even position in the HSSCCH code channel list of the UE.

Step 206: the base station calculates the TBSize, the HSDSCH code channel power and the number of HSDSCHs of the UE to which the queue belongs according to the CQI reported by the UE to which the queue belongs, the capability level of the UE, the data stock amount of the queue and the number of HSDSCH code channels currently available in the cell, meanwhile, updates the cell resource, return to step 202.

In this step, when the UE supports 64QAM and the modulation mode selected in the current scheduling is not the modulation mode of QPSK, and if the UE is not the last user, after calculating the number of HSDSCH code channels being M according to step 206, another HSDSCH code channel is needed to be reserved for this user, that is, the M+1 HSDSCH code channels are selected for the user.

For a UE supporting 64QAM and the modulation mode selected in the current scheduling is not the modulation mode of QPSK, and if the UE is the last user, it needs to acquire the number of HSDSCH code channels which can be used by the queue in the current scheduling according to the odd-even position of the HSSCCH acquired in step 205.

From the above embodiment, it can be seen that the technical scheme of the present invention provides a new method for scheduling process in the HSPA+ following the wideband code division multiple access (WCDMA) or time division-synchronous code division multiple access (TD-SCDMA) to fully use the code channel resource and the power resource in the cell and the control channels available in the cell, and also effectively improves the HSDPA user throughput in the cell.

The above description is only preferred embodiments of the present invention and is not intended to limit the present invention. For those skilled in the art, it can be understood that there may be a variety of modifications and variations in the present invention. All of modifications, equivalents and/or variations without departing from the appended claims of the present invention, should be included in the scope of the appended claims of the present invention.

It can be understood by those skilled in the art that all or part of steps in the above-mentioned method can be fulfilled by program instructing the relevant hardware components, and the program can be stored in a computer readable storage medium such as a read only memory, a magnetic disk or an optical disk, etc. Optionally, all or part of the steps in the above-mentioned embodiments can be implemented with one or more integrated circuits. Accordingly, each module/unit in the above-mentioned embodiments can be implemented in the form of hardware, or in the form of software function module. The present invention does not limit to any specific combination form of the hardware and the software.

### Industrial Applicability

The technical scheme of the present invention reasonable utilizes the HSSCCH resource, the HSDSCH code channel resource and power resource in the cell to achieve relatively ideal throughput for HSPA+.

## Claims

1. A method for scheduling a high-speed packet access system, comprising:
after a base station determines priority queues of user equipments to be scheduled in a cell, the base station selecting a high-speed shared control channel, HSSCCH, code channel for each user equipment according to a position of each user equipment in the priority queues, a condition of the user equipment being scheduled in the previous sub-frame and a capability level of the user equipment, and updating the number of high-speed downlink share channels, HSDSCHs, currently available in the cell, to perform scheduling; and
the base station selecting a transport block size, a HSDSCH code channel power, the number of HSDSCH code channels and a HSDSCH initial code channel number for each user equipment according to the HSSCCH code channel selected for each user equipment, the number of HSDSCH code channels available in the cell, a HSDSCH power available in the cell and the capability level of each user equipment,
wherein the step of the base station selecting a HSSCCH code channel for each user equipment, comprises:
the base station calculating, according to an order of the priority queues, transport block size, the number of HSDSCH code channels and the HSDSCH code channel power for each user equipment of other user equipments except the last user equipment in the priority queues; and selecting HSSCCH code channels and HSDSCH initial code channel numbers for the other user equipments except the last user equipment in the priority queues; and
the base station selecting a HSSCCH code channel for the last user equipment in the priority queues, and calculating transport block size, the number of HSDSCH code channels, a HSDSCH initial code channel number and a HSDSCH code channel power for the last user equipment in the priority queues.

2. The method of claim 1, wherein, the step of the base station selecting the number of HSDSCH code channels for each user equipment, comprises:
when one of the other user equipments supports a modulation mode of quadrature amplitude modulation, 64QAM, and a modulation mode selected for using in the current scheduling is not a modulation mode of quadrature phase shift keying, QPSK, the base station configuring M+1 HSDSCH code channels for this user equipment after the base station finds out that the number of HSDSCH code channels of this user equipment is M according to the 3GPP protocol.

3. The method of claim 1, wherein, the step of the base station selecting the number of HSDSCH code channels for each user equipment, comprises:
when the last user equipment supports a modulation mode of 64QAM and a modulation mode selected for using in the current scheduling is not a modulation mode of QPSK, the base station, according to a HSSCCH odd-even position selectable for the last user equipment, determining the number of HSDSCH code channels that can be used by the last user equipment in the current scheduling.

4. The method of claim 1, wherein,
the step of the base station selecting the HSSCCH code channels for the other user equipments, comprises:
selecting a HSSCCH code channel for the user equipment that selects the same HSSCCH in two continuous sub-frames; and
then selecting a HSSCCH code channel for the user equipment that supports a modulation mode of 64QAM and the modulation mode for which selected for using in the current scheduling is not a modulation mode of QPSK.

5. The method of claim 4, wherein,
the step of the base station selecting the HSSCCH code channel for the user equipment that supports the modulation mode of 64QAM and the modulation mode of which selected for using in the current scheduling is not the modulation mode of QPSK, comprises:
the base station determining the HSDSCH initial code channel number of the user equipment from back to front according to the number of HSDSCH code channels of the user equipment and the number of HSDSCH code channels currently available in the cell;
determining the HSSCCH code channel of the user equipment according to the 3GPP protocol; and
updating the number of the HSDSCH code channels available in the cell.

6. The method of any one of claims 1 to 5, wherein, after the base station determines the priority queues of the user equipments to be scheduled in the cell, the method further comprises:
if a user equipment to be scheduled satisfies any of the following conditions, the base station determining that the user equipment is the last user equipment in the priority queues:
condition A: the user equipment being located at the last in the priority queues;
condition B: a position serial number of the user equipment in the priority queues is equal to the total number of the HSSCCHs in the cell;
condition C: the number of the HSDSCH code channels in the 3GPP protocol corresponding to a channel quality indication reported by the user equipment and the capability level of the user equipment is larger than or equal to the number of the HSDSCHs currently available in the cell, and transport block size in the 3GPP protocol corresponding to the user equipment is smaller than a data stock amount of the user equipment;
condition D: the HSDSCH power in the cell is not strong enough.

7. The method of claim 6, wherein, the step of the base station determining that the user equipment is the last user equipment in the priority queues, further comprises:
condition C being satisfied if: for the user equipment supporting the modulation mode of 64QAM, the number of the HSDSCH code channels in the 3GPP protocol corresponding to the user equipment plus one is larger than or equal to the number of the HSDSCHs currently available in the cell, and transport block size in the 3GPP protocol corresponding to the user equipment is smaller than the data stock amount of the user equipment.

8. A device for scheduling a high-speed packet access system, comprising at least a judging module and a calculating and scheduling module, wherein:
the judging module is configured to: judge whether a user equipment to be scheduled currently is the last user equipment in priority queues of user equipments to be scheduled in a cell, and send a judgment result to the calculating and scheduling module; and
the calculating and scheduling module is configured to: receive the judgment result sent from the judging module, and
if the user equipment to be scheduled currently is not the last user equipment in the priority queues, calculate transport block size, the number of high-speed downlink share channels, HSDSCHs, and a HSDSCH code channel power of the user equipment; and select a high-speed shared control channel, HSSCCH, code channel and a HSDSCH initial code channel number for the user equipment, to perform scheduling; or
if the user equipment to be scheduled currently is the last user equipment in the priority queues, select a HSSCCH code channel for the user equipment, and calculate transport block size, the number of HSDSCH code channels, a HSDSCH initial code channel number and a HSDSCH code channel power of the user equipment, to perform scheduling.

9. The device of claim 8, wherein, the judging module is further configured to:
when the user equipment to be scheduled currently satisfies any of the following conditions, determine that the user equipment is the last user equipment in the priority queues:
condition A: the user equipment being located at the last in the priority queues;
condition B: a position serial number of the user equipment in the priority queues being equal to the total number of the HSSCCHs in the cell;
condition C: the number of the HSDSCH code channels in the 3GPP protocol corresponding to a channel quality indication reported by the user equipment and the capability level of the user equipment being larger than or equal to the number of the HSDSCHs currently available in the cell, and transport block size in the 3GPP protocol corresponding to the user equipment being smaller than a data stock amount of the user equipment;
condition D: the HSDSCH power in the cell is not strong enough.

10. The device of claim 9, wherein, the judging module is further configured to: satisfy the condition C if, for the user equipment supporting the modulation mode of quadrature amplitude modulation, 64QAM, the number of the HSDSCH code channels in the 3GPP protocol corresponding to the user equipment plus one is larger than or equal to the number of the HSDSCHs currently available in the cell, and transport block size in the 3GPP protocol corresponding to the user equipment is smaller than the data stock amount of the user equipment.

## Patentansprüche

1. Ein Verfahren zum Planen eines Hochgeschwindigkeitspaketzugangssystems, das Folgendes beinhaltet:
nachdem eine Basisstation Prioritätswarteschlangen von zu planenden Benutzergeräten in einer Zelle bestimmt, Auswählen durch die Basisstation eines geteilten Hochgeschwindigkeitssteuerungskanal-, HSSCCH(high-speed shared control channel)-Code-Kanals für jedes Benutzergerät gemäß einer Position von jedem Benutzergerät in den Prioritätswarteschlangen, einer Bedingung des Benutzergeräts, die im vorhergehenden Unterrahmen geplant wird, und eines Fähigkeitsniveaus des Benutzergeräts, und Aktualisieren der Zahl der geteilten Hochgeschwindigkeitsabwärtsstreckenkanäle, HSDSCH (high-speed downlink share channels), die aktuell in der Zelle verfügbar sind, um das Planen durchzuführen; und
Auswählen durch die Basisstation einer Transportblockgröße, einer HSDSCH-Code-Kanal-Leistung, der Zahl der HSDSCH-Code-Kanäle und einer anfänglichen HSDSCH-Code-Kanal-Zahl für jedes Benutzergerät gemäß dem für jedes Benutzergerät ausgewählten HSSCCH-Code-Kanal, der Zahl der HSDSCH-Code-Kanäle, die in der Zelle verfügbar sind, einer HSDSCH-Leistung, die in der Zelle verfügbar ist, und des Fähigkeitsniveaus von jedem Benutzergerät,
wobei der Schritt des Auswählens durch die Basisstation eines HSSCCH-Code-Kanals für jedes Benutzergerät Folgendes beinhaltet:
Berechnen durch die Basisstation, gemäß einer Reihenfolge der Prioritätswarteschlangen, der Transportblockgröße, der Zahl der HSDSCH-Code-Kanäle und der HSDSCH-Code-Kanal-Leistung für jedes Benutzergerät von anderen Benutzergeräten außer dem letzten Benutzergerät in den Prioritätswarteschlangen; und
Auswählen der HSSCCH-Code-Kanäle und anfänglichen HSDSCH-Code-Kanal-Zahlen für die anderen Benutzergeräte außer dem letzten Benutzergerät in den Prioritätswarteschlangen; und
Auswählen durch die Basisstation eines HSSCCH-Code-Kanals für das letzte Benutzergerät in den Prioritätswarteschlangen, und Berechnen der Transportblockgröße, der Zahl der HSDSCH-Code-Kanäle, einer anfänglichen HSDSCH-Code-Kanal-Zahl und einer HSDSCH-Code-Kanal-Leistung für das letzte Benutzergerät in den Prioritätswarteschlangen.

2. Verfahren gemäß Anspruch 1, wobei der Schritt des Auswählens durch die Basisstation der Zahl der HSDSCH-Code-Kanäle für jedes Benutzergerät Folgendes beinhaltet:
wenn eines der anderen Benutzergeräte einen Modulationsmodus der Quadratur-Amplitudenmodulation, 64QAM, unterstützt und ein Modulationsmodus, der zur Verwendung beim aktuellen Planen ausgewählt wird, kein Modulationsmodus der Quadratur-Phasenumtastung, QPSK, ist, Konfigurieren durch die Basisstation von M+1 HSDSCH-Code-Kanälen für dieses Benutzergerät, nachdem die Basisstation herausfindet, dass die Zahl der HSDSCH-Code-Kanäle dieses Benutzergeräts gemäß dem 3GPP-Protokoll M ist.

3. Verfahren gemäß Anspruch 1, wobei der Schritt des Auswählens durch die Basisstation der Zahl der HSDSCH-Code-Kanäle für jedes Benutzergerät Folgendes beinhaltet:
wenn das letzte Benutzergerät einen Modulationsmodus der 64QAM unterstützt und ein Modulationsmodus, der zur Verwendung beim aktuellen Planen ausgewählt wird, kein Modulationsmodus der QPSK ist, Bestimmen durch die Basisstation, gemäß einer für das letzte Benutzergerät auswählbaren HSSCCH-Gerade-Ungerade-Position, der Zahl der HSDSCH-Code-Kanäle, die vom letzten Benutzergerät beim aktuellen Planen verwendet werden können.

4. Verfahren gemäß Anspruch 1, wobei
der Schritt des Auswählens durch die Basisstation der HSSCCH-Code-Kanäle für die anderen Benutzergeräte Folgendes beinhaltet:
Auswählen eines HSSCCH-Code-Kanals für das Benutzergerät, das den gleichen HSSCCH in zwei kontinuierlichen Unterrahmen auswählt; und
dann Auswählen eines HSSCCH-Code-Kanals für das Benutzergerät, das einen Modulationsmodus der 64QAM unterstützt und dessen Modulationsmodus, der zur Verwendung beim aktuellen Planen ausgewählt wird, kein Modulationsmodus der QPSK ist.

5. Verfahren gemäß Anspruch 4, wobei
der Schritt des Auswählens durch die Basisstation des HSSCCH-Code-Kanals für das Benutzergerät, das den Modulationsmodus der 64QAM unterstützt und dessen Modulationsmodus, der zur Verwendung beim aktuellen Planen ausgewählt wird, kein Modulationsmodus der QPSK ist, Folgendes beinhaltet:
Bestimmen durch die Basisstation der anfänglichen HSDSCH-Code-Kanal-Zahl des Benutzergeräts von hinten nach vorne gemäß der Zahl der HSDSCH-Code-Kanäle des Benutzergeräts und der Zahl der HSDSCH-Code-Kanäle, die aktuell in der Zelle verfügbar sind;
Bestimmen des HSSCCH-Code-Kanals des Benutzergeräts gemäß dem 3GPP-Protokoll; und
Aktualisieren der Zahl der HSDSCH-Code-Kanäle, die in der Zelle verfügbar sind.

6. Verfahren gemäß einem der Ansprüche 1 bis 5, wobei, nachdem die Basisstation die Prioritätswarteschlangen von den zu planenden Benutzergeräten in der Zelle bestimmt, das Verfahren ferner Folgendes beinhaltet:
falls ein zu planendes Benutzergerät eine der folgenden Bedingungen befriedigt, Bestimmen durch die Basisstation, dass das Benutzergerät das letzte Benutzergerät in den Prioritätswarteschlangen ist:
Bedingung A: das Benutzergerät befindet sich in der letzten der Prioritätswarteschlangen;
Bedingung B: eine Positionsserienzahl des Benutzergeräts in den Prioritätswarteschlangen ist gleich der Gesamtzahl der HSSCCH in der Zelle;
Bedingung C: die Zahl der HSDSCH-Code-Kanäle im 3GPP-Protokoll entsprechend einer Kanalqualitätsanzeige, die vom Benutzergerät gemeldet wird, und dem Fähigkeitsniveau des Benutzergeräts ist größer als die oder gleich der Zahl der HSDSCH, die aktuell in der Zelle verfügbar sind, und die Transportblockgröße im 3GPP-Protokoll entsprechend dem Benutzergerät ist kleiner als ein Datenbestandsbetrag des Benutzergeräts;
Bedingung D: die HSDSCH-Leistung in der Zelle ist nicht stark genug.

7. Verfahren gemäß Anspruch 6, wobei der Schritt des Bestimmens durch die Basisstation, dass das Benutzergerät das letzte Benutzergerät in den Prioritätswarteschlangen ist, ferner Folgendes beinhaltet:
Bedingung C ist befriedigt, falls: für das Benutzergerät, das den Modulationsmodus der 64QAM unterstützt, die Zahl der HSDSCH-Code-Kanäle im 3GPP-Protokoll entsprechend dem Benutzergerät plus eins größer als die oder gleich der Zahl der HSDSCH ist, die aktuell in der Zelle verfügbar sind, und die Transportblockgröße im 3GPP-Protokoll entsprechend dem Benutzergerät kleiner als der Datenbestandsbetrag des Benutzergeräts ist.

8. Eine Vorrichtung zum Planen eines Hochgeschwindigkeitspaketzugangssystems, die mindestens ein Beurteilungsmodul und ein Berechnungs- und Planungsmodul beinhaltet, wobei:
das Beurteilungsmodul für Folgendes konfiguriert ist: Beurteilen, ob ein zu planendes Benutzergerät aktuell das letzte Benutzergerät in Prioritätswarteschlangen von zu planenden Benutzergeräten in einer Zelle ist, und Senden eines Beurteilungsresultats an das Berechnungs- und Planungsmodul; und
das Berechnungs- und Planungsmodul für Folgendes konfiguriert ist: Empfangen des Beurteilungsresultats, das vom Beurteilungsmodul gesendet wird, und
falls das zu planende Benutzergerät aktuell nicht das letzte Benutzergerät in den Prioritätswarteschlangen ist, Berechnen der Transportblockgröße, der Zahl der geteilten Hochgeschwindigkeitsabwärtsstreckenkanäle, HSDSCH, und einer HSDSCH-Code-Kanal-Leistung des Benutzergeräts; und Auswählen eines geteilten Hochgeschwindigkeitssteuerungskanal-, HSSCCH-Code-Kanals und einer anfänglichen HSDSCH-Code-Kanal-Zahl für das Benutzergerät, um das Planen durchzuführen; oder
falls das zu planende Benutzergerät aktuell das letzte Benutzergerät in den Prioritätswarteschlangen ist, Auswählen eines HSSCCH-Code-Kanals für das Benutzergerät, und Berechnen der Transportblockgröße, der Zahl der HSDSCH-Code-Kanäle, einer anfänglichen HSDSCH-Code-Kanal-Zahl und einer HSDSCH-Code-Kanal-Leistung des Benutzergeräts, um das Planen durchzuführen.

9. Vorrichtung gemäß Anspruch 8, wobei das Beurteilungsmodul ferner für Folgendes konfiguriert ist:
wenn das zu planende Benutzergerät aktuell eine der folgenden Bedingungen befriedigt, Bestimmen, dass das Benutzergerät das letzte Benutzergerät in den Prioritätswarteschlangen ist:
Bedingung A: das Benutzergerät befindet sich in der letzten der Prioritätswarteschlangen;
Bedingung B: eine Positionsserienzahl des Benutzergeräts in den Prioritätswarteschlangen ist gleich der Gesamtzahl der HSSCCH in der Zelle;
Bedingung C: die Zahl der HSDSCH-Code-Kanäle im 3GPP-Protokoll entsprechend einer Kanalqualitätsanzeige, die vom Benutzergerät gemeldet wird, und dem Fähigkeitsniveau des Benutzergeräts ist größer als die oder gleich der Zahl der HSDSCH, die aktuell in der Zelle verfügbar sind, und die Transportblockgröße im 3GPP-Protokoll entsprechend dem Benutzergerät ist kleiner als ein Datenbestandsbetrag des Benutzergeräts;
Bedingung D: die HSDSCH-Leistung in der Zelle ist nicht stark genug.

10. Vorrichtung gemäß Anspruch 9, wobei das Beurteilungsmodul ferner für Folgendes konfiguriert ist: Befriedigen der Bedingung C falls, für das Benutzergerät, das den Modulationsmodus der Quadratur-Amplitudenmodulation, 64QAM, unterstützt, die Zahl der HSDSCH-Code-Kanäle im 3GPP-Protokoll entsprechend dem Benutzergerät plus eins größer als die oder gleich der Zahl der HSDSCH ist, die aktuell in der Zelle verfügbar sind, und die Transportblockgröße im 3GPP-Protokoll entsprechend dem Benutzergerät kleiner als der Datenbestandsbetrag des Benutzergeräts ist.

## Revendications

1. Un procédé de programmation d'un système d'accès par paquets à haut débit, comprenant :
après qu'une station de base détermine des files d'attente de priorité d'équipements d'utilisateur à programmer dans une cellule, la sélection par la station de base d'un canal de code de canal de commande partagé à haut débit, HSSCCH (*high-speed shared control channel*), pour chaque équipement d'utilisateur selon une position de chaque équipement d'utilisateur dans les files d'attente de priorité, une condition de l'équipement d'utilisateur étant programmée dans la sous-trame précédente et un niveau de capacité de l'équipement d'utilisateur, et la mise à jour du nombre de canaux de partage de liaison descendante à haut débit, HSDSCH (*high-speed downlink share channels*), actuellement disponibles dans la cellule, pour effectuer une programmation ; et
la sélection par la station de base d'une taille de blocs de transport, d'une puissance de canal de code HSDSCH, du nombre de canaux de code HSDSCH et d'un nombre de canaux de code initial HSDSCH pour chaque équipement d'utilisateur selon le canal de code HSSCCH sélectionné pour chaque équipement d'utilisateur, du nombre de canaux de code HSDSCH disponibles dans la cellule, d'une puissance HSDSCH disponible dans la cellule et du niveau de capacité de chaque équipement d'utilisateur, dans lequel l'étape consistant pour la station de base à sélectionner un canal de code HSSCCH pour chaque équipement d'utilisateur comprend :
le calcul par la station de base, selon un ordre des files d'attente de priorité, d'une taille de blocs de transport, du nombre de canaux de code HSDSCH et de la puissance de canal de code HSDSCH pour chaque équipement d'utilisateur des autres équipements d'utilisateur à l'exception du dernier équipement d'utilisateur dans les files d'attente de priorité ; et la sélection de canaux de code HSSCCH et de nombres de canaux de code initiaux HSDSCH pour les autres équipements d'utilisateur à l'exception du dernier équipement d'utilisateur dans les files d'attente de priorité ; et
la sélection par la station de base d'un canal de code HSSCCH pour le dernier équipement d'utilisateur dans les files d'attente de priorité, et le calcul de la taille de blocs de transport, du nombre de canaux de code HSDSCH, d'un nombre de canaux de code initial HSDSCH et d'une puissance de canal de code HSDSCH pour le dernier équipement d'utilisateur dans les files d'attente de priorité.

2. Le procédé de la revendication 1, dans lequel l'étape consistant pour la station de base à sélectionner le nombre de canaux de code HSDSCH pour chaque équipement d'utilisateur, comprend :
lorsque l'un des autres équipements d'utilisateur prend en charge un mode de modulation de modulation d'amplitude en quadrature, 64QAM, et qu'un mode de modulation sélectionné pour une utilisation dans la programmation actuelle n'est pas un mode de modulation par déplacement de phase en quadrature, QPSK (*quadrature phase shift keying*), la configuration par la station de base de M+1 canaux de code HSDSCH pour cet équipement d'utilisateur après que la station de base découvre que le nombre de canaux de code HSDSCH de cet équipement d'utilisateur est M selon le protocole 3GPP.

3. Le procédé de la revendication 1, dans lequel l'étape consistant pour la station de base à sélectionner le nombre de canaux de code HSDSCH pour chaque équipement d'utilisateur, comprend :
lorsque le dernier équipement d'utilisateur prend en charge un mode de modulation de 64QAM et qu'un mode de modulation sélectionné pour une utilisation dans la programmation actuelle n'est pas un mode de modulation de QPSK, la détermination par la station de base, selon une position paire-impaire HSSCCH pouvant être sélectionnée pour le dernier équipement d'utilisateur, du nombre de canaux de code HSDSCH qui peuvent être utilisés par le dernier équipement d'utilisateur dans la programmation actuelle.

4. Le procédé de la revendication 1, dans lequel
l'étape consistant pour la station de base à sélectionner les canaux de code HSSCCH pour les autres équipements d'utilisateur, comprend :
la sélection d'un canal de code HSSCCH pour l'équipement d'utilisateur qui sélectionne le même HSSCCH dans deux sous-trames continues ; et
ensuite la sélection d'un canal de code HSSCCH pour l'équipement d'utilisateur qui prend en charge un mode de modulation de 64QAM et le mode de modulation pour lequel sélectionné pour une utilisation dans la programmation actuelle n'est pas un mode de modulation de QPSK.

5. Le procédé de la revendication 4, dans lequel
l'étape consistant pour la station de base à sélectionner le canal de code HSSCCH pour l'équipement d'utilisateur qui prend en charge le mode de modulation de 64QAM et le mode de modulation duquel sélectionné pour une utilisation dans la programmation actuelle n'est pas un mode de modulation de QPSK, comprend :
la détermination par la station de base du nombre de canaux de code initiaux HSDSCH de l'équipement d'utilisateur d'arrière en avant selon le nombre de canaux de code HSDSCH de l'équipement d'utilisateur et le nombre de canaux de code HSDSCH actuellement disponibles dans la cellule ;
la détermination du canal de code HSSCCH de l'équipement d'utilisateur selon le protocole 3GPP ; et
la mise à jour du nombre des canaux de code HSDSCH disponibles dans la cellule.

6. Le procédé de l'une quelconque des revendications 1 à 5, dans lequel, après que la station de base détermine les files d'attente de priorité des équipements d'utilisateur à programmer dans la cellule, le procédé comprend en outre :
si un équipement d'utilisateur à programmer satisfait à n'importe lesquelles des conditions suivantes, la détermination par la station de base que l'équipement d'utilisateur est le dernier équipement d'utilisateur dans les files d'attente de priorité :
condition A : l'équipement d'utilisateur étant situé dans la dernière des files d'attente de priorité ;
condition B : un numéro de série de position de l'équipement d'utilisateur dans les files d'attente de priorité est égal au nombre total des HSSCCH dans la cellule ;
condition C : le nombre de canaux de code HSDSCH dans le protocole 3GPP correspondant à une indication de qualité de canal rapportée par l'équipement d'utilisateur et le niveau de capacité de l'équipement d'utilisateur est supérieur ou égal au nombre des HSDSCH actuellement disponibles dans la cellule, et la taille de blocs de transport dans le protocole 3GPP correspondant à l'équipement d'utilisateur est inférieure à une quantité de stock de données de l'équipement d'utilisateur ;
condition D : la puissance HSDSCH dans la cellule n'est pas assez forte.

7. Le procédé de la revendication 6, dans lequel l'étape consistant pour la station de base à déterminer que l'équipement d'utilisateur est le dernier équipement d'utilisateur dans les files d'attente de priorité, comprend en outre :
le fait que la condition C est satisfaite si : pour l'équipement d'utilisateur prenant en charge le mode de modulation de 64QAM, le nombre de canaux de code HSDSCH dans le protocole 3GPP correspondant à l'équipement d'utilisateur plus un est supérieur ou égal au nombre des HSDSCH actuellement disponibles dans la cellule, et
la taille de blocs de transport dans le protocole 3GPP correspondant à l'équipement d'utilisateur est inférieure à la quantité de stock de données de l'équipement d'utilisateur.

8. Un dispositif pour programmer un système d'accès par paquets à haut débit, comprenant au moins un module de jugement et un module de calcul et de programmation, dans lequel :
le module de jugement est configuré pour : juger si un équipement d'utilisateur à programmer est actuellement le dernier équipement d'utilisateur dans des files d'attente de priorité d'équipements d'utilisateur à programmer dans une cellule, et envoyer un résultat de jugement au module de calcul et de programmation ; et
le module de calcul et de programmation est configuré pour : recevoir le résultat de jugement envoyé à partir du module de jugement, et
si l'équipement d'utilisateur à programmer n'est actuellement pas le dernier équipement d'utilisateur dans les files d'attente de priorité, calculer une taille de blocs de transport, le nombre de canaux de partage de liaison descendante à haut débit, HSDSCH, et une puissance de canal de code, HSDSCH, de l'équipement d'utilisateur ; et sélectionner un canal de code de canal de commande partagé à haut débit, HSSCCH, et un nombre de canaux de code initiaux HSDSCH pour l'équipement d'utilisateur, pour effectuer une programmation ; ou
si l'équipement d'utilisateur à programmer est actuellement le dernier équipement d'utilisateur dans les files d'attente de priorité, sélectionner un canal de code HSSCCH pour l'équipement d'utilisateur, et calculer une taille de blocs de transport, le nombre de canaux de code HSDSCH, un nombre de canaux de code initiaux HSDSCH et une puissance de canal de code HSDSCH de l'équipement d'utilisateur, pour effectuer une programmation.

9. Le dispositif de la revendication 8, dans lequel le module de jugement est en outre configuré pour :
lorsque l'équipement d'utilisateur à programmer satisfait actuellement à n'importe lesquelles des conditions suivantes, déterminer que l'équipement d'utilisateur est le dernier équipement d'utilisateur dans les files d'attente de priorité :
condition A : l'équipement d'utilisateur étant situé dans la dernière des files d'attente de priorité ;
condition B : un numéro de série de position de l'équipement d'utilisateur dans les files d'attente de priorité étant égal au nombre total des HSSCCH dans la cellule ;
condition C : le nombre des canaux de code HSDSCH dans le protocole 3GPP correspondant à une indication de qualité de canal rapportée par l'équipement d'utilisateur et le niveau de capacité de l'équipement d'utilisateur étant supérieur ou égal au nombre des HSDSCH actuellement disponibles dans la cellule, et la taille de blocs de transport dans le protocole 3GPP correspondant à l'équipement d'utilisateur étant inférieure à une quantité de stock de données de l'équipement d'utilisateur ;
condition D : la puissance HSDSCH dans la cellule n'est pas assez forte.

10. Le dispositif de la revendication 9, dans lequel le module de jugement est en outre configuré pour : satisfaire à la condition C si, pour l'équipement d'utilisateur prenant en charge le mode de modulation de modulation d'amplitude en quadrature, 64QAM, le nombre des canaux de code HSDSCH dans le protocole 3GPP correspondant à l'équipement d'utilisateur plus un est supérieur ou égal au nombre des HSDSCH actuellement disponibles dans la cellule, et la taille de blocs de transport dans le protocole 3GPP correspondant à l'équipement d'utilisateur est inférieure à la quantité de stock de données de l'équipement d'utilisateur.
